(19) **Europäisches Patentamt**
**European Patent Office**
**Office européen des brevets**

(11) **EP 4 586 110 A1**

(12) **EUROPEAN PATENT APPLICATION**
published in accordance with Art. 153(4) EPC

(43) Date of publication:
**16.07.2025 Bulletin 2025/29**

(51) International Patent Classification (IPC):
***G06F 17/15*** *(2006.01)*

(21) Application number: **23869810.4**

(52) Cooperative Patent Classification (CPC):
**G06F 17/10; G06F 17/15**

(22) Date of filing: **28.06.2023**

(86) International application number:
**PCT/CN2023/103417**

(87) International publication number:
**WO 2024/066562 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211204937**

(71) Applicant: **Huawei Cloud Computing Technologies Co., Ltd.**
**Guiyang, Guizhou 550025 (CN)**

(72) Inventors:
• **DAI, Lingcheng**
  **Guiyang, Guizhou 550025 (CN)**
• **YE, Yusi**
  **Guiyang, Guizhou 550025 (CN)**
• **ZHENG, Pengpeng**
  **Guiyang, Guizhou 550025 (CN)**
• **WU, Xiaofei**
  **Guiyang, Guizhou 550025 (CN)**
• **CAO, Liang**
  **Guiyang, Guizhou 550025 (CN)**

(74) Representative: **Gill Jennings & Every LLP**
**The Broadgate Tower**
**20 Primrose Street**
**London EC2A 2ES (GB)**

(54) **METHOD AND APPARATUS FOR SOLVING AN OBJECTIVE FUNCTION, AND COMPUTING DEVICE CLUSTER**

(57) Embodiments of this application disclose an objective function solving method and apparatus, and a computing device cluster, and belong to the field of cloud computing technologies. The method includes: receiving a solving requirement input by a user, where the solving requirement includes an objective function, a decision variable, and a constraint condition; determining, based on the solving requirement, a simplex method as a solving method, to solve the objective function; in a process of solving the objective function by using the simplex method, after solving the objective function according to a first pricing strategy by using the simplex method, determining, based on an objective improvement on the objective function by the current solving in the simplex method, a second pricing strategy for solving the objective function in a next iteration; and solving the objective function according to the second pricing strategy. According to this application, objective function solving efficiency can be improved.

```
┌─────────────────────────────────────────────────┐
│ Receive a solving requirement input by a user,   │ ── 101
│ where the solving requirement includes an        │
│ objective function                               │
└─────────────────────────────────────────────────┘
                       │
                       ▼
┌─────────────────────────────────────────────────┐
│ Determine to solve the objective function by     │ ── 102
│ using a simplex method                            │
└─────────────────────────────────────────────────┘
                       │
                       ▼
┌─────────────────────────────────────────────────┐
│ In a process of solving the objective function   │ ── 103
│ by using the simplex method, after solving the    │
│ objective function according to a first pricing   │
│ strategy by using the simplex method, determine,  │
│ based on an objective improvement on the          │
│ objective function by the current solving in the  │
│ simplex method, a second pricing strategy for     │
│ solving the objective function in a next iteration │
└─────────────────────────────────────────────────┘
```

FIG. 1

## Description

This application claims priority to Chinese Patent Application No. 202211204937.1, filed on September 29, 2022 and entitled "OBJECTIVE FUNCTION SOLVING METHOD AND APPARATUS, AND COMPUTING DEVICE CLUSTER", which is incorporated herein by reference in its entirety.

## TECHNICAL FIELD

This application relates to the field of cloud computing technologies, and in particular, to an objective function solving method and apparatus, and a computing device cluster.

## BACKGROUND

A simplex method (simplex method) is an algorithm to resolve a linear programming problem. The main idea of the simplex method is to find a basic feasible solution and determine whether the basic feasible solution is an optimal solution. If the basic feasible solution is not an optimal solution, another solution is found based on the basic feasible solution and then whether the another solution is the optimal solution is determined. In this way, iterative operations are performed until the optimal solution is found.

A pricing strategy (pricing) is an algorithm to determine, based on a basic variable and a non-basic variable corresponding to one iterative operation, a basic variable and a non-basic variable corresponding to a next iterative operation in the simplex method.

Because the simplex method includes a plurality of iterative operations, and each iterative operation is a complex operation process, efficiency of performing the simplex method by a computing device is low currently.

## SUMMARY

Embodiments of this application provide an objective function solving method and apparatus, and a computing device cluster, to improve objective function solving efficiency. The technical solutions are as follows:

According to a first aspect, an objective function solving method is provided, and the method may be performed by a computing device. The method includes: receiving a solving requirement input by a user, where the solving requirement includes an objective function; determining to solve the objective function by using a simplex method; and in a process of solving the objective function by using the simplex method, after solving the objective function according to a first pricing strategy by using the simplex method, determining, based on an objective improvement on the objective function by the current solving in the simplex method, a second pricing strategy for solving the objective function in a next iteration.

**In** the solution shown in this application, the computing device may receive the solving requirement that corresponds to the objective function and that is input by the user. For example, the computing device may be a server of a cloud platform. When the user needs to solve the objective function, the user may input the objective function and a constraint condition corresponding to each variable in the objective function to a user terminal, and the user terminal may send the solving requirement that carries the objective function and the corresponding constraint condition to the server. After receiving the solving requirement, the computing device may determine to solve the objective function by using the simplex method. In a process in which the computing device solves the objective function by using the simplex method, after performing each iterative operation according to the first pricing strategy, the computing device may determine, based on an objective improvement on the objective function by the iterative operation, the second pricing strategy to be applied in the next iterative operation.

The first pricing strategy and the second pricing strategy may be any pricing strategy. When the computing device performs the $1^{st}$ iterative operation of the simplex method on the objective function, the first pricing strategy may be a default pricing strategy or a pricing strategy specified by the user. When the computing device performs the $N^{th}$ iterative operation of the simplex method on the objective function (N is a positive integer greater than 1), the first pricing strategy may be a second pricing strategy determined after a previous iterative operation. It can be learned that, in a process in which the computing device solves the objective function by using the simplex method, after each iterative operation, a pricing strategy used in a next iterative operation may be updated based on an objective improvement in solving the objective function after the iterative operation. When the objective improvement decreases, the pricing strategy may be updated to a pricing strategy corresponding to a larger improvement for the next iterative operation. In this way, each iterative operation has a larger improvement on the objective function, to reduce a quantity of iterative operations and improve efficiency of solving the objective function by the computing device by using the simplex method.

In an example, after the solving the objective function according to a first pricing strategy by using the simplex method, the method further includes: determining a basis exchange degeneracy and an execution duration proportion that are corresponding to the solving performed according to the first pricing strategy, where the execution duration proportion is a proportion of duration of executing the first pricing strategy by the computing device to total duration of performing solving by the computing device according to the first pricing strategy. The determining, based on an objective improvement on the objective function by the current solving in the simplex method, a second pricing strategy for solving the objective function in a next iteration includes: determining, based on the objective improvement, the basis exchange degeneracy, and the execution duration proportion, the second pricing strategy for solving the objective function in the next iteration.

In the solution shown in this application, in addition to the objective improvement, indicator values for updating a pricing strategy corresponding to each iterative operation may further include a corresponding basis exchange degeneracy and execution duration proportion that are obtained through each iterative operation. In this way, the pricing strategy used in the next iterative operation is determined based on the objective improvement, the basis exchange degeneracy, and the execution duration proportion, so that an improvement on the objective function by each iterative operation in the process of solving the objective function by the computing device by using the simplex method can be improved, execution duration of each iterative operation can be reduced, and a case in which an iterative operation enters an infinite loop in the simplex method when the basis exchange degeneracy is excessively large can be avoided.

In an example, the determining, based on the objective improvement, the basis exchange degeneracy, and the execution duration proportion, the second pricing strategy for solving the objective function in the next iteration includes: determining an objective strategy reference value based on the objective improvement, the basis exchange degeneracy, and the execution duration proportion; and determining the second pricing strategy corresponding to the objective strategy reference value based on a correspondence between a strategy reference value and a pricing strategy.

In the solution shown in this application, the objective strategy reference value may be calculated based on the objective improvement, the basis exchange degeneracy, and the execution duration proportion. A person skilled in the art may set the correspondence between the objective strategy reference value and the pricing strategy based on experience. In this way, the second pricing strategy applicable to the next iterative operation can be determined based on the correspondence and the objective strategy reference value calculated after each iterative operation. In this way, efficiency of solving the objective function by the computing device by using the simplex method can be improved.

In an example, the determining an objective strategy reference value based on the objective improvement, the basis exchange degeneracy, and the execution duration proportion includes: obtaining a first weight coefficient corresponding to the objective improvement, a second weight coefficient corresponding to the execution duration proportion, and a third weight coefficient corresponding to the basis exchange degeneracy; and performing weighted calculation on the objective improvement, the execution duration proportion, and the basis exchange degeneracy based on the first weight coefficient, the second weight coefficient, and the third weight coefficient, to obtain the objective strategy change value.

In an example, the first weight coefficient is greater than the second weight coefficient, and the second weight coefficient is greater than the third weight coefficient.

In the solution shown in this application, when the objective strategy reference value is calculated, the first weight coefficient corresponding to the objective improvement may be set to a largest value, so that the pricing strategy can be preferentially updated to a pricing strategy corresponding to a large improvement. In this way, efficiency of performing the simplex method by the computing device can be improved.

In an example, after the determining a second pricing strategy for solving the objective function in a next iteration, the method further includes: sending the second pricing strategy to the user terminal; receiving a pricing strategy confirmation notification sent by the user terminal; and solving the objective function according to the second pricing strategy by using the simplex method.

In the solution shown in this application, after determining the second pricing strategy used in the next iterative operation, the computing device may send the second pricing strategy to the user terminal. After the user determines, on the user terminal, to use the second pricing strategy to perform the next iterative operation, the user may send the pricing strategy confirmation notification to the computing device through the user terminal. After receiving the pricing strategy confirmation notification sent by the user terminal, the computing device may continue to solve the objective function according to the second pricing strategy by using the simplex method.

According to a second aspect, an objective function solving apparatus is provided. The apparatus includes:

a receiving module, configured to receive a solving requirement input by a user, where the solving requirement includes an objective function;
a determining module, configured to determine to solve the objective function by using a simplex method; and
a solving module, configured to: in a process of solving the objective function by using the simplex method, after solving the objective function according to a first pricing strategy by using the simplex method, determine, based on an objective improvement on the objective function by the current solving in the simplex method, a second pricing strategy for solving the objective function in a next iteration.

In an example, the solving module is further configured to:

determine a basis exchange degeneracy and an execution duration proportion that are corresponding to the solving performed according to the first pricing strategy, where the execution duration proportion is a proportion of duration of executing the first pricing strategy by a computing device to total duration of performing solving by the computing device according to the first pricing strategy; and

determine, based on the objective improvement, the basis exchange degeneracy, and the execution duration proportion, the second pricing strategy for solving the objective function in the next iteration.

In an example, the solving module is configured to:

determine an objective strategy reference value based on the objective improvement, the basis exchange degeneracy, and the execution duration proportion; and

determine the second pricing strategy corresponding to the objective strategy reference value based on a correspondence between a strategy reference value and a pricing strategy.

In an example, the solving module is configured to:
obtain a first weight coefficient corresponding to the objective improvement, a second weight coefficient corresponding to the execution duration proportion, and a third weight coefficient corresponding to the basis exchange degeneracy; and
perform weighted calculation on the objective improvement, the execution duration proportion, and the basis exchange degeneracy based on the first weight coefficient, the second weight coefficient, and the third weight coefficient, to obtain the objective strategy change value.

In an example, the first weight coefficient is greater than the second weight coefficient, and the second weight coefficient is greater than the third weight coefficient.

In an example, the apparatus further includes a sending module, configured to send the second pricing strategy to a user terminal.

The receiving module is configured to receive a pricing strategy confirmation notification sent by the user terminal.

The solving module is configured to solve the objective function according to the second pricing strategy by using the simplex method.

According to a third aspect, a computing device cluster is provided, including at least one computing device. Each computing device includes a processor and a memory, and the processor of the at least one computing device is configured to execute instructions stored in the memory of the at least one computing device, so that the computing device cluster performs the method according to the first aspect or the examples corresponding to the first aspect.

According to a fourth aspect, a computer program product including instructions is provided. When the instructions are run by a computing device cluster, the computing device cluster is enabled to perform the method according to the first aspect or the examples corresponding to the first aspect.

According to a fifth aspect, a computer-readable storage medium is provided, including computer program instructions. When the computer program instructions are executed by a computing device cluster, the computing device cluster performs the method according to the first aspect or the examples corresponding to the first aspect.

## BRIEF DESCRIPTION OF DRAWINGS

FIG. 1 is a flowchart of an objective function solving method according to this application;
FIG. 2 is a flowchart of an objective function solving method according to this application;
FIG. 3 is a diagram of an objective function solving system according to this application;
FIG. 4 is a diagram of a structure of an objective function solving apparatus according to this application;
FIG. 5 is a diagram of a computing device according to this application;
FIG. 6 is a diagram of a computing device cluster according to this application; and
FIG. 7 is a diagram of connection between computing devices according to this application.

## DESCRIPTION OF EMBODIMENTS

To make the objectives, technical solutions, and advantages of this application clearer, the following further describes the implementations of this application in detail with reference to the accompanying drawings.
This application provides an objective function solving method. In the solving method, an objective function may be solved by using a simplex method, so that efficiency of solving the objective function by a computing device can be improved, efficiency of performing the simplex method by the computing device can be improved, and processing resources occupied for performing the simplex method in the computing device can be reduced.

For ease of understanding of embodiments of this application, the following first briefly describes the simplex method.

The simplex method is an algorithm to resolve a linear programming problem. The main idea of the simplex method is to find a basic feasible solution and determine whether the basic feasible solution is an optimal solution. If the basic feasible solution is not an optimal solution, another solution is found based on the basic feasible solution and then whether the another solution is the optimal solution is determined. In this way, iterative operations are performed until the optimal solution is found.

In the simplex method, the to-be-solved linear programming problem may be expressed as an objective function for obtaining a maximum solution or a minimum solution, and a plurality of constraint conditions for the linear programming problem are expressed as a system of constraint equations. Then, the objective function is solved by using the system of constraint equations. The objective function is actually a multi-element equation, and the objective function includes a plurality of to-be-solved variables. The system of constraint equations includes a plurality of equations, and each equation corresponds to a constraint condition of at least one variable.

For example, if the linear programming problem is to minimize production costs of a factory, variables included in an objective function are factors that affect the production costs of the factory, for example, a quantity of products produced and a quantity of employees in the factory. A coefficient corresponding to each variable may be costs corresponding to a single variable, for example, material costs of each type of product and a salary of each worker. The constraint conditions in the linear programming problem may be constraint conditions on values of different variables in the objective function, for example, a minimum or maximum production quantity of each type of product and a minimum quantity of employees in a factory. In addition, each constraint condition may be converted into a corresponding constraint equation, and constraint equations corresponding to a plurality of constraint conditions may form a system of constraint equations.

A mathematical programming solver (Mathematical Programming Solver) is a software system that can be used to solve the linear programming problem by using the simplex method. The mathematical programming solver may be run on a computing device, to solve the linear programming problem by using the simplex method. After obtaining the objective function and the constraint equations corresponding to the linear programming problem, the mathematical programming solver solves the objective function by using the simplex method. The steps are as follows:

Step S1: Convert a system of constraint equations into a standard matrix, and introduce a slack variable.

Step S2: Determine an m-order identity matrix in the matrix corresponding to the system of constraint equations, determine a variable corresponding to the m-order identity matrix as a non-basic variable, and determine a remaining variable in the objective function as a basic variable.

Step S3: Determine a test number corresponding to each non-basic variable, and determine, based on the determined test number, whether an optimal solution of the objective function can be obtained currently. If it is determined that the optimal solution of the objective function cannot be obtained, step S4 is performed. If it is determined that the optimal solution of the objective function can be obtained, the optimal solution of the objective function is calculated, and the calculation ends after the optimal solution of the objective function is obtained.

Step S4: Determine a leaving variable and an entering variable based on a current basic variable and a current non-basic variable. The leaving variable is a variable that is in the basic variables and that needs to be updated to a non-basic variable, and the entering variable is a variable that is in the non-basic variables and that needs to be updated to a basic variable.

Step S5: Update, based on the leaving variable and the entering variable, the matrix corresponding to the current system of constraint equations, and perform step S3.

It can be learned from steps S1 to S5 that, in the simplex method, step S3 to step S5 need to be cyclically performed, until it is determined, based on the test value, that the optimal solution of the objective function cannot be obtained in step S3, and then the iterative calculation ends. In step S4, the operation of determining the leaving variable and the entering variable based on the current basic variable and the current non-basic variable may be referred to as a basis exchange operation. That is, in step S4, a pricing strategy needs to be applied to perform an operation.

The pricing strategy may include three parts of algorithms: A first part of algorithm may be classified into Dantzig (Danzig), Devex, Steepest-edge, and the like based on whether the basis exchange operation is standardized. Calculation complexity of the three algorithms increases sequentially according to the foregoing arrangement sequence, and improvements for the objective function also increase sequentially according to the foregoing arrangement sequence. A second part of algorithm may be classified into Nested, Partial, Full, and the like based on a search range and a region of a non-basic variable in the basis exchange operation. Calculation complexity of the three algorithms increases sequentially according to the foregoing arrangement sequence, and search ranges increase sequentially according to the foregoing arrangement sequence. A third part of algorithm is classified into Weighted-free, Bland (Bland), and adhoc (adhoc) based on basis degeneracies. Calculation complexity of the three algorithms increases sequentially according to the foregoing arrangement sequence. During implementation, any algorithm may be selected from each part of algorithm to form the pricing strategy. For example, the pricing strategy may include three algorithms: Dantzig, Partial, and adhoc.

It should be noted that the foregoing solving steps of the simplex method and the algorithms corresponding to the pricing strategy are merely examples for description. In practice, the solving steps of the simplex method may further include division in other forms, and the pricing strategy may further have another algorithm, which are not listed one by one in this application.

At present, a skilled person usually specifies a pricing strategy in the process of using the mathematical programming solver to perform the simplex method. The specified pricing strategy is used for each basis exchange operation by the mathematical programming solver. Because there are a large quantity of variables in the linear programming problem, the optimal solution of the objective function can be obtained only after a large quantity of iterative operations (for example, tens of thousands of iterative operations). In addition, because a basis exchange operation in each iterative operation is a complex operation process, it is difficult for one pricing strategy to be applied to each basis exchange operation in the simplex method. Therefore, in a current process of performing the simplex method, the basis exchange operation in the simplex method is performed according to only one pricing strategy. This reduces efficiency of solving the linear programming problem by using the simplex method.

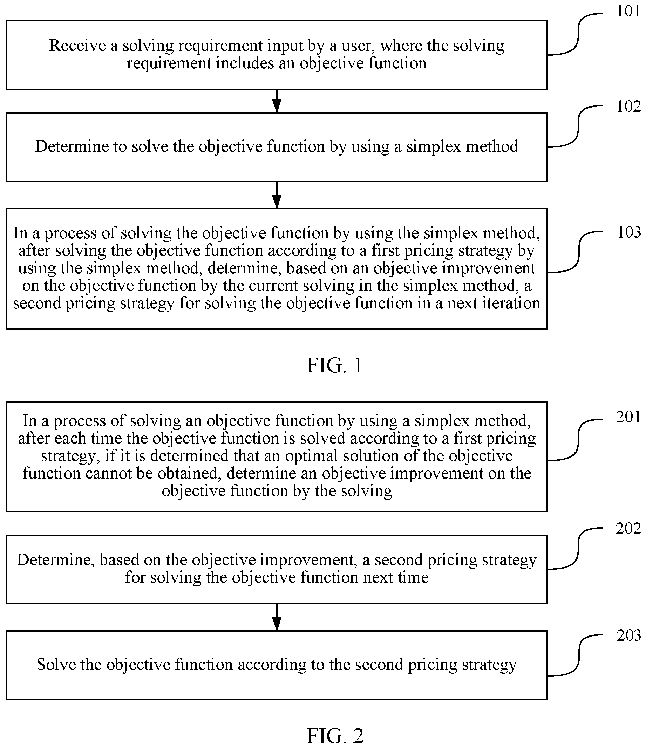

FIG. 1 is a flowchart of an objective function solving method according to this application. The method may be performed by a computing device. In an example, the computing device may be a server on a cloud computing platform. A mathematical programming solver for solving an objective function may be run on the server. With reference to FIG. 1, the following describes the objective function solving method provided in this application.

Step 101: The server receives a solving requirement input by a user, where the solving requirement includes the objective function.

During implementation, when the user needs to solve the objective function, the user may input the objective function and a system of constraint equations corresponding to constraint conditions of the objective function on variables to a user terminal. The user terminal may use the solving requirement to carry the objective function and the system of constraint equations corresponding to the constraint conditions, and send the solving requirement to the server.

Step 102: The server determines to solve the objective function by using a simplex method.

In a possible case, the user may specify, on the user terminal, the server to solve the objective function by using the simplex method. For example, the solving requirement may further carry specification information for the user to specify to solve the objective function by using the simplex method. After receiving the solving requirement, the server may determine, based on the specification information carried in the solving requirement, to solve the objective function in the solving requirement by using the simplex method.

In another possible case, the server may input, to the mathematical programming solver, the objective function and the system of constraint equations that are carried in the solving requirement. In the mathematical programming solver, the simplex method may be used by default to solve the objective function. If the mathematical programming solver cannot obtain an optimal solution of the objective function by using the simplex method, the objective function can be solved by using another algorithm.

Step 103: In a process of solving the objective function by using the simplex method, after solving the objective function according to a first pricing strategy by using the simplex method, the server determines, based on an objective improvement on the objective function by the current solving in the simplex method, a second pricing strategy for solving the objective function in a next iteration.

**In** a process in which the computing device solves the objective function by using the simplex method, after performing each iterative operation according to the first pricing strategy, the computing device may determine, based on an objective improvement on the objective function by the iterative operation, the second pricing strategy to be applied in the next iterative operation.

The first pricing strategy and the second pricing strategy may be any pricing strategy. When the computing device performs the $1^{st}$ iterative operation of the simplex method on the objective function, the first pricing strategy may be a default pricing strategy or a pricing strategy specified by the user. When the computing device performs the $N^{th}$ iterative operation of the simplex method on the objective function (N is a positive integer greater than 1), the first pricing strategy may be a second pricing strategy determined after a previous iterative operation. It can be learned that, in a process in which the computing device solves the objective function by using the simplex method, after each iterative operation, a pricing strategy used in a next iterative operation may be updated based on an objective improvement on the objective function by the iterative operation. When the objective improvement decreases, the pricing strategy may be updated to a pricing strategy corresponding to a larger improvement for the next iterative operation. In this way, each iterative operation has a larger improvement on the objective function, to reduce a quantity of iterative operations and improve efficiency of solving the objective function by the computing device by using the simplex method.

With reference to FIG. 2, the following describes in detail a process in which the computing device solves the objective function by using the simplex method.

Step 201: In the process of solving the objective function by using the simplex method, after each time the objective function is solved according to the first pricing strategy, if it is determined that an optimal solution of the objective function cannot be obtained, determine an objective improvement on the objective function by the solving.

The objective improvement is a decrement of a solution of the objective function obtained by solving the objective function once, relative to a solution corresponding to previous solving of the objective function. A larger decrement indicates a closer distance between a solution of the objective function and the optimal solution. The objective improvement may be determined by using a difference between two times of solving. For example, the objective improvement=-difference corresponding to two adjacent solutions of the objective function/current solution of the objective function.

The first pricing strategy may be any pricing strategy. The solving of the objective function according to the first pricing strategy is corresponding processing of steps S4 and S5 followed by iteration to step S3 in the foregoing simplex method. If it is determined that the optimal solution of the objective function cannot be obtained after the objective function is solved according to the first pricing strategy, the objective improvement on the objective function by the solving is determined.

Step 202: Determine, based on the objective improvement, the second pricing strategy for next solving of the objective function.

After the objective improvement is determined, the second pricing strategy for the next solving of the objective function may be determined based on the objective improvement. That is, a pricing strategy used for a basis exchange operation in the next solving is determined. The second pricing strategy may be the same as or different from the first pricing strategy.

In a possible case, a skilled person may preset a correspondence between different improvement ranges and pricing strategies. For example, an improvement range corresponding to a smaller improvement may correspond to a pricing strategy with a larger improvement. After the objective improvement is determined, an objective improvement range to which the objective improvement belongs may be determined, and then a pricing strategy corresponding to the objective improvement range is determined in the correspondence between improvement ranges and pricing strategies. The determined pricing strategy is the second pricing strategy.

In another possible case, a skilled person may preset an improvement threshold. After the objective improvement is determined, it may be determined whether the objective improvement is less than the improvement threshold. If the objective improvement is less than the improvement threshold, the first pricing strategy may not be updated. In this case, the second pricing strategy determined based on the objective improvement is the first pricing strategy. If the objective improvement is greater than or equal to the improvement threshold, the first pricing strategy may be updated. For example, the updated second pricing strategy is determined according to the foregoing correspondence. For example, in the correspondence, an improvement range to which a smaller improvement belongs may correspond to a pricing strategy with a larger improvement. For example, the pricing strategy includes Steepest-edge, Partial, and adhoc.

Step 203: Solve the objective function according to the second pricing strategy.

After the second pricing strategy is determined, a basis exchange operation may be performed according to the second pricing strategy in the next solving of the objective function. That is, step S4 in the foregoing simplex method is performed according to the second pricing strategy, and then steps S5 and S3 in the foregoing simplex method are performed in sequence.

When steps S5 and S3 in the foregoing simplex method are performed again, step 201 may be performed. In this way, cyclically performing steps 201 to 203 is actually cyclically performing steps S4, S5, and S3 in the foregoing simplex method. After step S3 in the foregoing simplex method is performed, if it is determined that the optimal solution of the objective function can be obtained, the optimal solution of the objective function is calculated and the processing ends.

In the process of solving the objective function by using the simplex method provided in this embodiment of this application, after each solving of the objective function, an objective improvement corresponding to the solving of the objective function may be determined. When the objective improvement is small, a pricing strategy with a larger improvement on the objective function may be determined, and the determined pricing strategy is used as a pricing strategy in a next basis exchange operation. In this way, the pricing strategy is dynamically adjusted each time based on an objective improvement determined after the objective function is solved, so that each solution of the objective function has a larger decrement compared with a previous solution. In this way, a quantity of iterations in the process of performing the simplex method can be reduced on the whole, and performing efficiency of the simplex method can be improved.

In an implementation, after it is determined in step 201 that the optimal solution of the objective function cannot be obtained, in addition to obtaining the objective improvement as an indicator value for updating the pricing strategy, a basis exchange degeneracy corresponding to the solving performed according to the first pricing strategy and an execution duration proportion corresponding to the first pricing strategy may be obtained as indicator values for updating the pricing strategy.

The basis exchange degeneracy is a proportion of a quantity of basic variable corresponding to a base step 0 to a quantity of basic variables after basis exchange is performed according to the pricing strategy. A larger basis exchange degeneracy indicates a higher probability that an iterative operation in the simplex method falls into an infinite loop. The execution duration proportion is a proportion of first duration to second duration. The first duration is processing duration of the pricing strategy in a processor in the computing device, and the second duration is total duration in which the processor in the computing device performs solving according to the pricing strategy. For the execution duration proportion corresponding to the first pricing strategy, the processor may perform timing on a basis exchange operation performed according to the first pricing strategy, to obtain the first duration. The processor may further perform timing on solving including the basis exchange operation performed according to the first pricing strategy, to obtain the second duration. Then, the proportion of the first duration to the second duration may be determined as the execution duration proportion corresponding to the first pricing strategy.

After the objective improvement, the basis exchange degeneracy, and the execution duration proportion are obtained through calculation, the determining the second pricing strategy for next solving of the objective function in step 202 may be replaced with: determining, based on the objective improvement, the basis exchange degeneracy, and the execution duration proportion, the second pricing strategy for the next solving of the objective function.

For example, a skilled person may preset a correspondence between an improvement range, a degeneracy range, a duration proportion range, and a pricing strategy. Each time an objective improvement, a basis exchange degeneracy, and an execution duration proportion are obtained, an objective improvement range to which the objective improvement belongs, an objective degeneracy range to which the basis exchange degeneracy belongs, and an objective duration proportion range to which the execution duration proportion belongs may be separately determined. Then, in the correspondence, a pricing strategy corresponding to the objective improvement range, the objective degeneracy range, and the objective duration proportion range is determined. The pricing strategy is the second pricing strategy. For example, in the correspondence, a pricing strategy corresponding to an improvement range to which a smaller improvement belongs and a duration proportion range to which a smaller duration belongs has a larger improvement. For example, the pricing strategy includes Steepest-edge, Partial, and adhoc.

In an example, that the computing device determines, based on the objective improvement, the basis exchange degeneracy, and the execution duration proportion, the second pricing strategy for the next solving of the objective function may further include:

Step 2021: Determine an objective strategy reference value based on the objective improvement, the execution duration proportion, and the basis exchange degeneracy.

After the objective improvement, the execution duration proportion, and the basis exchange degeneracy are obtained, the objective strategy reference value may be calculated based on the objective improvement, the execution duration proportion, and the basis exchange degeneracy, and then the second pricing strategy is determined based on the objective strategy reference value.

For example, different weight coefficients may be set for the objective improvement, the execution duration proportion, and the basis exchange degeneracy. After the objective improvement, the execution duration proportion, and the basis exchange degeneracy are obtained, weighted calculation (for example, weighted summation and weighted average calculation) may be performed on the objective improvement, the execution duration proportion, and the basis exchange degeneracy based on a first weight coefficient corresponding to the objective improvement, a second weight coefficient corresponding to the execution duration proportion, and a third weight coefficient corresponding to the basis exchange degeneracy, to obtain the objective strategy reference value.

The first weight coefficient set for the objective improvement may be greater than the second weight coefficient set for the execution duration proportion, and the second weight coefficient set for the execution duration proportion may be greater than the third weight coefficient set for the basis exchange degeneracy. In this way, a pricing strategy corresponding to a next basis exchange operation may be selected by comprehensively considering an improvement of each iterative operation on the objective function, duration of the basis exchange operation, and the basis exchange degeneracy. In this way, the pricing strategy can be updated in a plurality of aspects such as the improvement, the execution duration proportion, and the basis exchange degeneracy, so that the updated pricing strategy is more applicable to each basis exchange operation. In addition, a weight coefficient corresponding to the objective improvement is set to a largest value, so that the pricing strategy can be preferentially updated to a pricing strategy corresponding to a large improvement. In this way, efficiency of performing the simplex method by the computing device can be improved.

Step 2022: Determine the second pricing strategy corresponding to the objective strategy reference value based on a correspondence between a strategy reference value and a pricing strategy.

A skilled person may preset the correspondence between a strategy reference value and a pricing strategy. After the objective strategy reference value is determined, a pricing strategy corresponding to the objective strategy reference value may be determined in the correspondence, and the pricing strategy is the second pricing strategy.

In an implementation, the computing device that performs steps 201 to 203 may be a server, for example, a server on a cloud computing platform. In a process of performing the simplex method, the server may send, to the user terminal, an indicator value that is determined after each basis exchange operation and that is for updating the pricing strategy and a pricing strategy determined based on the indicator value, and the user terminal may display the received indicator value and the corresponding pricing strategy. The user may view, on the user terminal, the indicator value corresponding to each basis exchange operation in the process of performing the simplex method by the server, and the pricing strategy that corresponds to the next basis exchange operation and that is determined based on the indicator value.

The user may trigger a simplex method execution pause instruction on the user terminal, and view the indicator value that is for updating the pricing strategy by the user and that is determined after the previous iterative operation and the determined second pricing strategy. The user may determine, based on the indicator value displayed by the user terminal, whether to use the second pricing strategy in the next basis exchange operation. If the user determines to use the second pricing strategy, the user terminal may send a pricing strategy confirmation notification corresponding to the second pricing strategy to the server. After receiving, from the user terminal, the pricing strategy confirmation notification corresponding to the second pricing strategy, the server may continue to perform the simplex method, and perform the next basis exchange operation according to the second pricing strategy.

If the user determines, based on the indicator value displayed on the user terminal, to perform the next basis exchange operation according to another pricing strategy (a third pricing strategy), the user may specify, on the user terminal, the third pricing strategy for the next basis exchange operation, and send, by using the user terminal, a pricing strategy confirmation notification corresponding to the third pricing strategy. After receiving, from the user terminal, the pricing strategy confirmation notification corresponding to the third pricing strategy, the server may continue to perform the simplex method, and perform the next basis exchange operation according to the third pricing strategy.

In this embodiment provided in this application, in a process of performing the simplex method by the server, the user may view the indicator value for updating the pricing strategy, and may update the pricing strategy based on the indicator value, so that flexibility and execution efficiency of performing the simplex method by the server can be improved.

An embodiment of this application provides an objective function solving system. The system includes a simplex method execution unit, a pricing strategy recommendation unit, and a user decision unit.

An input of the simplex method execution unit is a solving matrix of a simplex method obtained through initialization of a linear programming problem. An output of the simplex method execution unit is an optimal solution of an objective function corresponding to the linear programming problem. Initializing the linear programming problem is processing performed in steps S1 and S2 in the foregoing simplex method.

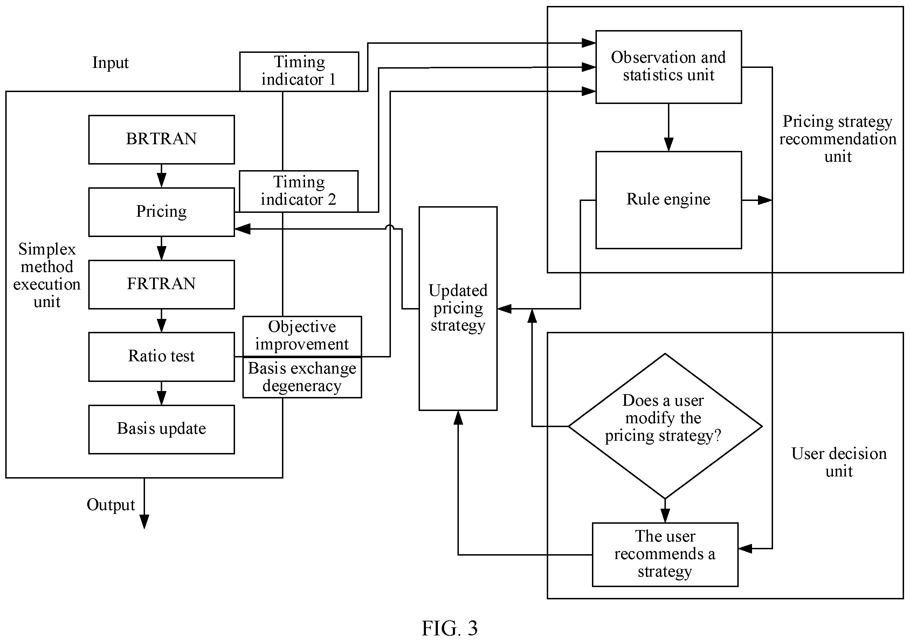

Refer to FIG. 3. An algorithm executed in the simplex method execution unit may include five parts of algorithms such as BTRAN, Pricing, FTRAN, Ratio test, and Basis update. The Pricing algorithm is a pricing strategy, and may be used to determine a leaving variable. The BTRAN and FTRAN algorithms are used to perform matrix operations. The Ratio test may be used to determine an entering variable. The Basis update algorithm updates the solving matrix based on an updated basic variable and non-basic variable. The processing performed by the simplex method execution unit is the processing in steps S3, S4, and S5 in the foregoing simplex method.

Still refer to FIG. 3. Each time the computing device executes an algorithm in the simplex method execution unit, the computing device may record corresponding execution duration to obtain a timing indicator 1 (that is, the second duration), and may correspondingly record duration of performing Pricing each time to obtain a timing indicator 2 (that is, the first duration). The Ratio test algorithm may also calculate an objective improvement and a basis exchange degeneracy. The simplex method execution unit may use the timing indicator 1, the timing indicator 2, the objective improvement, and the basis exchange degeneracy that are obtained each time as indicator values for updating a pricing strategy, and send the indicator values to an observation and statistics unit in the pricing strategy recommendation unit. The observation and statistics unit may input the received indicator values to a rule engine, and the rule engine performs, based on the indicator values, processing of determining, based on the objective improvement, the basis exchange degeneracy, and the execution duration proportion, the second pricing strategy for the next solving of the objective function in step 202, to obtain an updated pricing strategy. The updated pricing strategy is a Pricing algorithm executed by the simplex method execution unit next time.

In addition, the pricing strategy recommendation unit may send the indicator values for updating the pricing strategy and the updated pricing strategy to the user decision unit. If a user does not modify the pricing strategy in the user decision unit, the updated pricing strategy determined by the pricing strategy recommendation unit is used as a Pricing algorithm executed by the simplex method execution unit next time. If the user modifies the pricing strategy in the user decision unit, a pricing strategy modified by the user is used as the Pricing algorithm executed by the simplex method execution unit next time.

The simplex method execution unit, the pricing strategy recommendation unit, and the user decision unit in the execution system may be deployed on a same computing device, or may be deployed on different computing devices. For example, the simplex method execution unit and the pricing strategy recommendation unit may be deployed on a server, and the user decision unit may be deployed on a user terminal.

In embodiments provided in this application, the simplex method may be used to solve a load balancing problem (load balancing) in a computing device cluster. The load balancing problem is a mixed integer linear programming problem, and load distribution of each group of computing resources is obtained by solving with reference to a simplex algorithm, to achieve load balancing and optimize resource usage.

In an example, the load balancing problem may be that when task allocation conditions are met, a batch of computing tasks is allocated to a smallest quantity of computing devices in a computing device cluster for execution. Each task may be allocated to a plurality of computing devices for execution.

For the load balancing problem, an objective function indicates a total quantity of computing devices that execute the tasks, a quantity of variables in the objective function is a quantity of computing devices in the computing device cluster, and a value of each variable is 0 or 1. The corresponding objective function may be as follows:

$$min \sum_{i=0}^{N} worker\_used\,[i]$$

N is the quantity of computing devices in the computing device cluster, and *worker_used*[*i*] indicates whether a device i is used. When *worker_used*[*i*]=0, it indicates that the device i is not used or is not allocated with a computing task. When *worker_used*[*i*]=1, it indicates that the device i is allocated with a computing task. In this way, the objective function includes N variables.

The corresponding task allocation conditions are as follows:

1. If the device i is not used, no task can be allocated to the device i. If the device i is in use, the $k^{th}$ task allocated to the device i is subject to a limitation of a maximum value $a_i$.

$$a_k worker\_used[i] - reserved\_capacity[k][i] \geq 0, \forall k \in \{0,1,\dots,M\}, i \in \{0,1,\dots,N\}$$

$a_k$*worker_used*[*i*] represents a limitation on the $k^{th}$ task executed by the device i, for example, may be a data amount that corresponds to the $k^{th}$ task and that can be processed by the device i. *reserved_capacity*[*k*][*i*] represents a data amount that is of the $k^{th}$ task and that is processed by the device i. M is a quantity of to-be-allocated tasks.

2. The device i has a capability upper limit $b_i$. A data amount of tasks allocated to the device i is less than $b_i$.

$$\sum_{k=0}^{M} reserved\_capacity[k][i] \leq b_i, \forall i \in \{0,1,\dots,N\}$$

The upper limit $b_i$ may be a sum of data amounts corresponding to executable computing tasks executed by the device i.

3. Robustness is required during computing task allocation. That is, after any device i that may be allocated with a task k is removed, remaining devices can still ensure that a data amount of to-be-completed tasks is greater than $a_k$.

$$\sum_{k=0,k\neq i}^{N} reserved\_capacity[k][i] \geq a_k, \forall i \in \{0,1,\dots,M\}$$

In this way, after the objective function is solved, an optimal solution of the objective function is a minimum quantity of computing devices that execute the batch of computing tasks in the computing device cluster when task allocation is met. In addition, a data amount of each computing task executed by each computing device may be obtained.

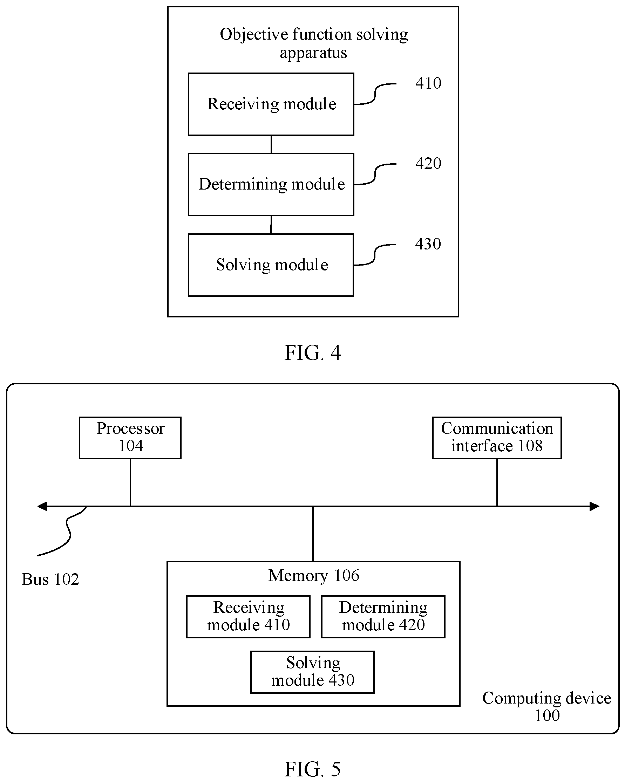

FIG. 4 shows an objective function solving apparatus according to an embodiment of this application. As shown in FIG. 4, the apparatus includes:

a receiving module 410, configured to: receive a solving requirement input by a user, where the solving requirement includes an objective function; and specifically perform a receiving function in step 101 and another implicit step;
a determining module 420, configured to: determine to solve the objective function by using a simplex method; and specifically perform a determining function in step 102 and another implicit step; and
a solving module 430, configured to: in a process of solving the objective function by using the simplex method, after solving the objective function according to a first pricing strategy by using the simplex method, determine, based on an objective improvement on the objective function by the current solving in the simplex method, a second pricing strategy for solving the objective function in a next iteration; and specifically perform a solving function in step 103 and another implicit step.

In an example, the solving module 430 is further configured to:
determine a basis exchange degeneracy and an execution duration proportion that are corresponding to the solving performed according to the first pricing strategy, where the execution duration proportion is a proportion of duration of executing the first pricing strategy by a computing device to total duration of performing solving by the computing device according to the first pricing strategy; and determine, based on the objective improvement, the basis exchange degeneracy, and the execution duration proportion, the second pricing strategy for solving the objective function in the next iteration

In an example, the solving module 430 is configured to:

determine an objective strategy reference value based on the objective improvement, the basis exchange degeneracy, and the execution duration proportion; and
determine the second pricing strategy corresponding to the objective strategy reference value based on a correspondence between a strategy reference value and a pricing strategy.

In an example, the solving module 430 is configured to:
obtain a first weight coefficient corresponding to the objective improvement, a second weight coefficient corresponding to the execution duration proportion, and a third weight coefficient corresponding to the basis exchange degeneracy; and perform weighted calculation on the objective improvement, the execution duration proportion, and the basis exchange degeneracy based on the first weight coefficient, the second weight coefficient, and the third weight coefficient, to obtain the objective strategy change value.

In an example, the first weight coefficient is greater than the second weight coefficient, and the second weight coefficient is greater than the third weight coefficient.

In an example, the apparatus further includes a sending module, configured to send the second pricing strategy to a user terminal.

The receiving module 410 is configured to receive a pricing strategy confirmation notification sent by the user terminal.

The solving module 430 is configured to solve the objective function according to the second pricing strategy by using the simplex method.

The receiving module 410, the determining module 420, and the solving module 430 may all be implemented by software, or may be implemented by hardware. For example, the following uses the solving module 430 as an example to describe an implementation of the solving module 430. Similarly, for implementations of the receiving module 410 and the determining module 420, refer to the implementation of the solving module 430.

The module is used as an example of a software functional unit, and the solving module 430 may include code run on a computing instance. The computing instance may include at least one of a physical host (computing device), a virtual machine, and a container. Further, there may be one or more computing instances. For example, the solving module 430 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions. VPCs are interconnected through the communication gateway.

The module is used as an example of a hardware functional unit, and the solving module 430 may include at least one computing device such as a server. Alternatively, the solving module 430 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the solving module 430 may be distributed in a same region, or may be distributed in different regions. The plurality of computing devices included in the solving module 430 may be distributed in a same AZ, or may be distributed in different AZs. Similarly, the plurality of computing devices included in the determining module 420 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the receiving module 410, the determining module 420, and the solving module 430 may be separately configured to perform any step in the objective function solving method. The solving module 430 may be configured to perform any step in the objective function solving method, and steps implemented by the determining module 420 and the solving module 430 may be specified as required. The receiving module 410, the determining module 420, and the solving module 430 separately implement different steps in the objective function solving method, to implement all functions of the objective function solving apparatus.

This application further provides a computing device 100. As shown in FIG. 5, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 5, but it does not mean that there is only one bus or only one type of bus. The bus 102 may include a path for transmitting information between components (for example, the memory 106, the processor 104, and the communication interface 108) of the computing device 100.

The processor 104 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid state drive (solid state drive, SSD).

The memory 106 stores executable program code, and the processor 104 executes the executable program code to separately implement functions of the receiving module 410, the determining module 420, and the solving module 430, to implement the objective function solving method. That is, the memory 106 stores instructions of the objective function solving method.

Alternatively, the memory 106 stores executable code, and the processor 104 executes the executable code to separately implement functions of the objective function solving apparatus, so as to implement the objective function solving method. That is, the memory 106 stores instructions for performing the objective function solving method.

The communication interface 108 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. **In** some embodiments, the computing device may alternatively be a terminal device, for example, a desktop computer, a notebook computer, or a smartphone.

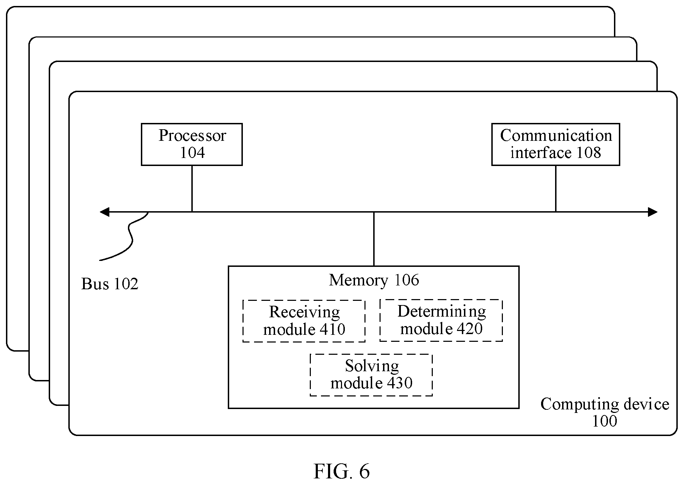

As shown in FIG. 6, the computing device cluster includes at least one computing device 100. Memories 106 in one or more computing devices 100 in the computing device cluster may store same instructions of the objective function solving method.

In some possible implementations, the memories 106 in the one or more computing devices 100 in the computing device cluster each may alternatively store a part of instructions that are used for performing the objective function solving method. In other words, a combination of the one or more computing devices 100 may jointly execute the instructions of the objective function solving method.

It should be noted that memories 106 in different computing devices 100 in the computing device cluster may store different instructions that each are used to perform a part of functions of the objective function solving apparatus. In other words, instructions stored in memories 106 in different computing devices 100 may implement functions of one or more of the receiving module 410, the determining module 420, and the solving module 430.

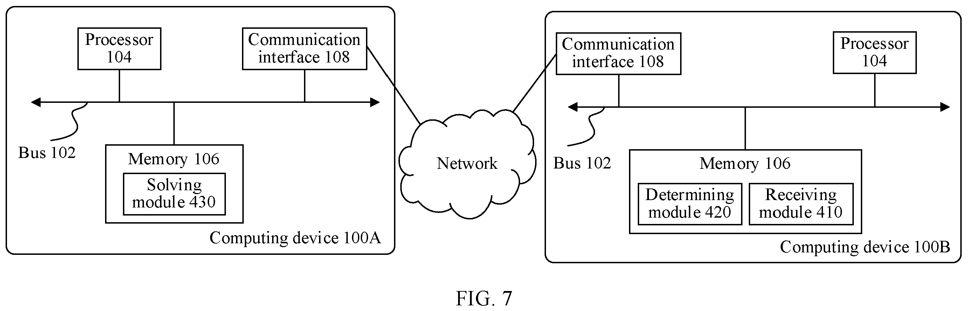

In some possible implementations, the one or more computing devices in the computing device cluster may be connected through a network. The network may be a wide area network, a local area network, or the like. FIG. 7 shows a possible implementation. As shown in FIG. 7, two computing devices 100A and 100B are connected through a network. Specifically, each computing device is connected to the network through a communication interface of the computing device. In this type of possible implementation, a memory 106 in the computing device 100A stores instructions for performing a function of the solving module 430. In addition, a memory 106 in the computing device 100B stores instructions for performing functions of the receiving module 410 and the determining module 420.

A connection manner between computing device clusters shown in FIG. 7 may be that, considering that the objective function solving method in this application requires a large quantity of computing resources, it is considered that a function implemented by the solving module 430 is performed by the computing device 100A.

It should be understood that functions of the computing device 100A shown in FIG. 7 may alternatively be completed by a plurality of computing devices 100. Likewise, functions of the computing device 100B may be alternatively performed by a plurality of computing devices 100.

An embodiment of this application further provides another computing device cluster. For a connection relationship between computing devices in the computing device cluster, refer to the connection manners of the computing device cluster in FIG. 6 and FIG. 7. A difference is that memories 106 in one or more computing devices 100 in the computing device cluster may store same instructions of the objective function solving method.

In some possible implementations, the memories 106 in the one or more computing devices 100 in the computing device cluster each may alternatively store a part of instructions of the objective function solving method. In other words, a combination of the one or more computing devices 100 may jointly execute the instructions of the objective function solving method.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform an objective function solving method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct a computing device to perform an objective function solving method.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

**Claims**

1. An objective function solving method, wherein the method comprises:

   Receiving a solving requirement input by a user, wherein the solving requirement comprises an objective function;
   Determining to solve the objective function by using a simplex method; and
   in a process of solving the objective function by using the simplex method, after solving the objective function according to a first pricing strategy by using the simplex method, determining, based on an objective improvement on the objective function by the current solving in the simplex method, a second pricing strategy for solving the objective function in a next iteration.

2. The method according to claim 1, wherein after the solving the objective function according to a first pricing strategy by using the simplex method, the method further comprises:

   determining a basis exchange degeneracy and an execution duration proportion that are corresponding to the solving performed according to the first pricing strategy, wherein the execution duration proportion is a proportion of duration of executing the first pricing strategy by a computing device to total duration of performing solving by the computing device according to the first pricing strategy; and
   the determining, based on an objective improvement on the objective function by the current solving in the simplex method, a second pricing strategy for solving the objective function in a next iteration comprises:
   determining, based on the objective improvement, the basis exchange degeneracy, and the execution duration proportion, the second pricing strategy for solving the objective function in the next iteration.

3. The method according to claim 2, wherein the determining, based on the objective improvement, the basis exchange degeneracy, and the execution duration proportion, the second pricing strategy for solving the objective function in the next iteration comprises:

   determining an objective strategy reference value based on the objective improvement, the basis exchange degeneracy, and the execution duration proportion; and

determining the second pricing strategy corresponding to the objective strategy reference value based on a correspondence between a strategy reference value and a pricing strategy.

4. The method according to claim 3, wherein the determining an objective strategy reference value based on the objective improvement, the basis exchange degeneracy, and the execution duration proportion comprises:

obtaining a first weight coefficient corresponding to the objective improvement, a second weight coefficient corresponding to the execution duration proportion, and a third weight coefficient corresponding to the basis exchange degeneracy; and

performing weighted calculation on the objective improvement, the execution duration proportion, and the basis exchange degeneracy based on the first weight coefficient, the second weight coefficient, and the third weight coefficient, to obtain the objective strategy change value.

5. The method according to claim 4, wherein the first weight coefficient is greater than the second weight coefficient, and the second weight coefficient is greater than the third weight coefficient.

6. The method according to any one of claims 1 to 5, wherein after the determining a second pricing strategy for solving the objective function in a next iteration, the method further comprises:

sending the second pricing strategy to a user terminal;

receiving a pricing strategy confirmation notification sent by the user terminal; and

solving the objective function according to the second pricing strategy by using the simplex method.

7. An objective function solving apparatus, wherein the apparatus comprises:

a receiving module, configured to receive a solving requirement input by a user, wherein the solving requirement comprises an objective function;

a determining module, configured to determine to solve the objective function by using a simplex method; and

a solving module, configured to: in a process of solving the objective function by using the simplex method, after solving the objective function according to a first pricing strategy by using the simplex method, determine, based on an objective improvement on the objective function by the current solving in the simplex method, a second pricing strategy for solving the objective function in a next iteration.

8. The apparatus according to claim 7, wherein the solving module is further configured to:

determine a basis exchange degeneracy and an execution duration proportion that are corresponding to the solving performed according to the first pricing strategy, wherein the execution duration proportion is a proportion of duration of executing the first pricing strategy by a computing device to total duration of performing solving by the computing device according to the first pricing strategy; and

determine, based on the objective improvement, the basis exchange degeneracy, and the execution duration proportion, the second pricing strategy for solving the objective function in the next iteration.

9. The apparatus according to claim 8, wherein the solving module is configured to:

determine an objective strategy reference value based on the objective improvement, the basis exchange degeneracy, and the execution duration proportion; and

determine the second pricing strategy corresponding to the objective strategy reference value based on a correspondence between a strategy reference value and a pricing strategy.

10. The apparatus according to claim 9, wherein the solving module is configured to:

obtain a first weight coefficient corresponding to the objective improvement, a second weight coefficient corresponding to the execution duration proportion, and a third weight coefficient corresponding to the basis exchange degeneracy; and

perform weighted calculation on the objective improvement, the execution duration proportion, and the basis exchange degeneracy based on the first weight coefficient, the second weight coefficient, and the third weight coefficient, to obtain the objective strategy change value.

11. The apparatus according to claim 10, wherein the first weight coefficient is greater than the second weight coefficient, and the second weight coefficient is greater than the third weight coefficient.

12. The apparatus according to any one of claims 7 to 11, wherein the apparatus further comprises a sending module, configured to send the second pricing strategy to a user terminal;

   the receiving module is configured to receive a pricing strategy confirmation notification sent by the user terminal; and
   the solving module is configured to solve the objective function according to the second pricing strategy by using the simplex method.

13. A computing device cluster, comprising at least one computing device, wherein each computing device comprises a processor and a memory; and
   a processor in the at least one computing device is configured to execute instructions stored in a memory in the at least one computing device, so that the computing device cluster performs the method according to any one of claims 1 to 6.

14. A computer program product comprising instructions, wherein when the instructions are run by a computing device cluster, the computing device cluster is enabled to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.

Receive a solving requirement input by a user, where the solving requirement includes an objective function — 101

Determine to solve the objective function by using a simplex method — 102

In a process of solving the objective function by using the simplex method, after solving the objective function according to a first pricing strategy by using the simplex method, determine, based on an objective improvement on the objective function by the current solving in the simplex method, a second pricing strategy for solving the objective function in a next iteration — 103

FIG. 1

In a process of solving an objective function by using a simplex method, after each time the objective function is solved according to a first pricing strategy, if it is determined that an optimal solution of the objective function cannot be obtained, determine an objective improvement on the objective function by the solving — 201

Determine, based on the objective improvement, a second pricing strategy for solving the objective function next time — 202

Solve the objective function according to the second pricing strategy — 203

FIG. 2

FIG. 3

EP 4 586 110 A1

Objective function solving
apparatus

Receiving module — 410

Determining module — 420

Solving module — 430

FIG. 4

Processor
104

Communication
interface 108

Bus 102

Memory 106

Receiving
module 410

Determining
module 420

Solving
module 430

Computing device
100

FIG. 5

FIG. 6

FIG. 7

## INTERNATIONAL SEARCH REPORT

| International application No. |
|---|
| **PCT/CN2023/103417** |

| A. | CLASSIFICATION OF SUBJECT MATTER |
|---|---|

G06F17/15(2006.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, VEN, USTXT, CNKI, IEEE: 单纯形法, 定价策略, 动态, 迭代, 修改, 退化, 改进度, 权重, simplex method, simplex algorithm, pricing, dynamic, iteration, modify, degeneration, improvement, weight

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2013036085 A1 (INTERNATIONAL BUSINESS MACHINES CORP.) 07 February 2013 (2013-02-07) description, paragraphs 0041, 0060-0062 and 0173 | 1-15 |
| A | CN 104156508 A (STATE GRID CORPORATION OF CHINA et al.) 19 November 2014 (2014-11-19) entire document | 1-15 |
| A | CN 112943479 A (NORTHWESTERN POLYTECHNICAL UNIVERSITY) 11 June 2021 (2021-06-11) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 September 2023** | **19 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103417**

| Patent document cited in search report | | | Publication date (day/month/year) | Patent family member(s) | | | Publication date (day/month/year) |
|---|---|---|---|---|---|---|---|
| US | 2013036085 | A1 | 07 February 2013 | US | 2016086092 | A1 | 24 March 2016 |
| CN | 104156508 | A | 19 November 2014 | None | | | |
| CN | 112943479 | A | 11 June 2021 | None | | | |

Form PCT/ISA/210 (patent family annex) (July 2022)

**REFERENCES CITED IN THE DESCRIPTION**

**Patent documents cited in the description**

- CN 202211204937